# EUROPÄISCHE PATENTSCHRIFT

(11) **EP 0 519 367 B1**
(45) Veröffentlichungstag und Bekanntmachung des Hinweises auf die Patenterteilung: **02.09.1998**
(21) Anmeldenummer: 92110031.9
(22) Anmeldetag: 15.06.1992
(51) Int. Cl.: C08K 5/04, C08L 3/04

(54) **Stärke-Polymer-Mischung, Verfahren zu ihrer Herstellung sowie aus ihr erhältliche Produkte**
Starch/polymer mixture, procedure for its production and products obtainable therefrom
Composition amidon/polymère, procédé pour sa fabrication et produits obtenus à partir de celle-ci

(30) Priorität: 17.06.1991 DE 4119915
(43) Veröffentlichungstag der Anmeldung: 23.12.1992
(73) Patentinhaber: Ems-Inventa AG, 8039 Zürich (CH)
(72) Erfinder: Buehler, Friedrich Severin, Dr. rer. nat., CH-7430 Thusis (CH); Schmid, Eduard, Dr. sc.nat., CH-7402 Bonaduz (CH); Schultze, Hans-Joachim, Dr. rer.nat., CH-7000 Chur (CH)
(74) Vertreter: Müller-Boré & Partner Patentanwälte

(56) Entgegenhaltungen:
- EP-A- 0 282 368
- EP-A- 0 417 828
- EP-A- 0 459 560
- EP-A- 0 471 402
- WO-A-91/02025
- DE-A- 4 013 344
- US-A- 4 125 495

## Beschreibung

Die Erfindung betrifft eine biologisch abbaubare und einphasige Stärke-Polymer-Mischung aus einem ausgewählten linearen Polymeren und einer Stärkeformmasse, die vorzugsweise aus chemisch modifizierter Stärke, Weichmacher, Emulgator und Harnstoff bzw. dessen Derivaten hergestellt wird. Die Erfindung betrifft ferner ein Verfahren zur Herstellung dieser einphasigen Stärke-Polymer-Mischung. Insbesondere betrifft die Erfindung die aus der einphasigen Stärke-Polymer-Mischung durch Spritzgiessen, Extrusion, Koextrusion, Blasformen, Spritzprägen und Umformen hergestellten thermoplastischen geformten Teile, insbesondere Folien.

Da Stärke ein makromolekulares pflanzliches Kohlehydrat ist, gibt es Bestrebungen, sie als sogenannten "natürlichen Kunststoff" auf den verschiedensten Gebieten unter Einsatz der bekannten Kunststoffverarbeitungstechniken zur Anwendung zu bringen. Aufgrund ihrer körnigen Struktur müssen native Stärken aber erst aufgeschlossen bzw. destrukturiert werden, bevor sie thermoplastisch verarbeitbar sind. Danach liegt die Stärke zwar als thermoplastisch verarbeitbarer, biologisch abbaubarer Kunststoff vor, aber ohne die von den Kunststoffen bekannten und gewünschten guten Eigenschaften zu besitzen. Um diese zu erzielen, muss eine solche thermoplastische Stärkegrundmasse weiter veredelt werden. Oftmals verliert sie hierbei aber ihre vollständige biologische Abbaubarkeit.

Die EP 0 344 118 A2 betrifft ein Polymer-Blend-Material aus einer Schmelze vom zumindest einem wasserhaltigen destrukturierten hydrophilen Polymeren und zumindest einem synthetischen im wesentlichen wasserunlöslichen thermoplastischen Polymeren. Anhand von Beispielen für Blends auf der Basis von Gelatine sowie Cellulosederivaten und Polyethylen, Polystyrol, Polyvinylether, Polyoxymethylen und Ethylen-Acrylsäure-Copolymeren wird eine Verbesserung der Dimensionsstabilität durch den Zusatz des wasserunlöslichen Polymeren gezeigt. Der dort angegebene Hinweis auf eine mögliche Bioabbaubarkeit, nämlich der Verlust an dieser zusätzlichen Stabilität nach mehreren Tagen, ist jedoch für die aus den Blends gefromten Erzeugnisse eher als Nachteil zu werten, ohne tatsächlich etwas über die Bioabbaubarkeit auszusagen.

WO-A-9102025beschreibteinePolymerzusammensetzung,diezurHerstellung von Gegenständen aus biologisch abbaubaren Plastikmaterialien verwendbar ist. Die Polymerzusammensetzung setzt sich dabei aus einer Mischung aus destrukturierter Stärke und einem Copolymer, ausgewählt aus Ethylen-vinylacetat (EVA), Ethylen-glycidylacrylat, Ethylen-methylmethacrylat, Ethylen-maleinsäureanhydrid und möglicherweise Ethylen-vinylalkohol, zusammen. Die dabei verwendeten EVA-Polymere gelten jedoch als nicht biologisch abbaubar, da ein langkettiges Kohlenstoffrückgrat vorhanden ist. Ferner sind diese Polymere in Wasser dispergierbar.

Die EP 0 327 505 A2 beschreibt ein schmelzegemischtes Polymer-Blend-Material aus destrukturierter, aber chemisch nicht modifizierter Stärke und mindestens einem wasserunlöslichen, synthetischen thermoplastischen Polymeren.

In gleicher Weise sind aus den Offenlegungsschriften EP 0 409 789 A2, EP 0 409 788 A2, EP 0 409 783 A2, EP 0 409 782 A2, EP 0 409 781 Al, EP 408 503 A2, EP 0 408 502 A2, EP 0 408 501 A2, EP 0 407 350 A2, EP 0 404 728 A2, EP 0 404 723 A2 und EP 0 404 727 A2 Polymer-Blend-Zusammensetzungen aus destrukturierter, ebenfalls chemisch nicht modifizierter Stärke und einem funktionalisierten Polymeren bekannt. Diese Zusammensetzungen können jeweils zusätzlich noch ein wasserunlösliches, thermoplastisches Polymeres enthalten. Hierbei wirkt dann das funktionalisierte Polymere als Verträglichkeitsvermittler zwischen der chemisch nicht modifizierten Stärke und dem zusätzlichen dritten thermoplastischen Polymeren.

Aufgabe der vorliegenden Erfindung war, eine biologisch abbaubare und einphasige Stärke-Polymer-Mischung für die thermoplastische Verarbeitung zur Verfügung zu stellen, die keinen polymeren Verträglichkeitsvermittler enthält sowie ein Verfahren zur Herstellung dieser Mischung. Weiterhin soll diese Stärke-Polymer-Mischung als Granulat lagerstabil, d.h. feuchtigkeitsunempfindlich sein und sich zur Produktion von thermoplastisch geformten Teilen, insbesondere hochdehnfähigen, kaltwasserbeständigen und verschweissbaren Folien eignen. Eine besondere Anwendung soll die einphasige Stärke-Polymer-Mischung in der Herstellung von Koextrusionsfolien mit weiteren Polymeren ohne Haftvermittlerzusatz finden.

Diese Aufgabe wird gelöst durch die kennzeichnenden Merkmale des Anspruches 1 und 17 bzw. 18.

Ueberraschenderweise wurde gefunden, dass eine einphasige Stärke-Polymer-Mischung ohne polymeren Verträglichkeitsvermittler für die thermoplastische Verarbeitung herstellbar ist, wenn die eingesetzte Stärke eine chemisch modifizierte Stärke mit bestimmten Additiven ist, und das eingesetzte Polymere ein ausgewähltes, lineares Polvmeres mit einem Schmelz- oder Erweichungspunkt von 60 bis 150°C ist.

Die erfindungsgemäße, biologisch abbaubare, einphasige Stärke-Polymer-Mischung besteht aus
(a) 10 bis 99 Gew.-Teilen einer Stärkeformmasse hergestellt aus
   (i) 95 bis 45 Gew.-Teilen mindestens einer chemisch modifizierten Stärke, wobei die chemisch modifizierte Stärke einen Amylosegehalt von 20 bis 100 Gew.-% besitzt und der Substitutionsgrad 0,01 bis 0,2 beträgt,
   (ii) 5 bis 55 Gew.-Teilen mindestens eines Weichmachers und/oder Destrukturierungsmittels, wobei der Weichmacher eine organische Verbindung mit mindestens einer Hydroxylgruppe ist, und sich die Gew.-Teile von (i) und (ii) auf 100 ergänzen
   (iii) 0,1 bis 2 Gew.-Teilen eines Emulgators, sowie
(b) 90 bis 1 Gew.-Teilen mindestens eines Polyamids oder Polyesters mit einem Schmelz- oder Erweichungspunkt von 60 bis 150°C,
   wobei sich die Gewichtsteile der Komponenten (a) und (b) auf 100 ergänzen und im Verhältnis von 10/90 bis 99/1 vorgemischt und bei Temperaturen von mindestens 10°C unter dem Zersetzungspunkt der Stärke und maximal 30°C über dem Schmelzpunkt der Komponente (b) in der Schmelze homogen gemischt und extrudiert oder coextrudiert werden,
   und gegebenenfalls zusätzlich
(c) bis 20 Gew.-Teilen von auf diesem Gebiet üblichen Zusatzstoffen.

Die erfindungsgemäss einzusetzende chemisch modifizierte Stärke soll einen natürlichen Wassergehalt von 5 bis 16 Gew.-% haben.

Die Herstellung der bevorzugt verwendeten chemisch modifizierten Stärke erfolgt über ein spezielles Verfahren, welches in der deutschen Patentanmeldung DE 41 17 628 6 beschrieben ist, wobei 95 bis 53,2 Gew.-Teile chemisch modifizierte Stärke, 4,8 bis 39,8 Gew.-Teile mindestens eines Weichmachers und 0,1 bis 5 Gew.-Teile Harnstoff und/oder Harnstoffderivate und 0,1 bis 2 Gew.-Teile mindestens eines Emulgators bei hinreichend erhöhten Temperaturen und Drucken in einem Extruder beim Vorliegen der unten angegebenen Wassergehalte aufgeschlossen und als Schmelze extrudiert werden.

Die vorzugsweise eingesetzte chemisch modifizierte Starke besitzt einen natürlichen Wassergehalt von 5 bis 16 Gew.-%, bevorzugt 6 bis 12 Gew.-%, besonders bevorzugt 6 bis 8 Gew.-%. In der Regel resultiert ein Endwassergehalt der einphasigen Stärke-Polymer-Mischung von 2 bis 8 Gew.-%, bevorzugt 2 bis 5 Gew.-%. Diese vorzugsweise eingesetzte Stärke wurde durch Umsetzung ihrer OH-Gruppen mit Alkylenoxiden oder Ether-, Ester-, Urethan-, Carbamat- und/oder Isocyanat- bildenden Stoffen modifiziert. Bevorzugt sind Hydroxy(C₂ bis C₆) alkyl-, Acetyl- oder Carbamatstärken oder deren Mischungen.

Der Substitutionsgrad der chemisch modifizierten Stärke beträgt 0,01 bis 0,2 und der Amylosegehalt liegt bei 20 bis 100 Gew.-%, bevorzugt 50 bis 100 Gew.-%, besonders bevorzugt 65 - 100 Gew.-%.

Der Weichmacher ist eine organische Verbindung mit mindestens einer Hydroxylgruppe, bevorzugt Polyol, besonders bevorzugt Glycerin, Sorbit, Mannit, D-Glukose, Ethylenglykol, Polyethlyenglykol, Propylenglykol oder deren Mischungen. Er wird in Mengen von 4,8 bis 39,8 Gew.-Teilen, bevorzugt 9,8 bis 39,8 Gew.-Teilen, besonders bevorzugt 15 bis 30 Gew.-Teilen, eingesetzt.

Der Harnstoff und/oder die Harnstoffderivate werden in Mengen von 0,1 bis 5 Gew.-Teilen, bevorzugt 0,1 bis 2 Gew.-Teilen, besonders bevorzugt 2 Gew.-Teilen, zugesetzt.

Der Emulgator besitzt einen Hydrophil-Lipophil-Balance-Wert von 0 bis 20, bevorzugt 10 bis 20, und wird in Mengen von 0,1 bis 2 Gew.-Teilen, bevorzugt 0,1 bis 2 Gew.-Teilen, besonders bevorzugt 0,2 Gew.-Teilen, eingesetzt. Als Emulgatoren eignen sich Metallstearate, Glycerinmonostearate, Polyoxyethylen (20)-Sorbitanmonolaurat, Polyoxyethlyen (20)-Sorbitanmonopalmitat, Polyoxyethylen (40)-Stearat und/oder Polyoxyethylen (100)-Stearat.

In einer bevorzugten Ausführung besteht Komponente a) aus 70 Gew.-Teilen Hydroxyethyl- und/oder Hydroxypropylstärke mit einem Substitutionsgrad von 0,06 und einem Amylosegehalt von 50 Gew.-%, 15 Gew.-Teilen Glycerin, 12,8 Gew.- Teilen Sorbit, 2 Gew.-Teilen Harnstoff und 0,2 Gew.-Teilen Magnesiumstearat.

Als Komponente (b) eignen sich ausgewählte lineare Polymere mit einem Schmelz- oder Erweichungspunkt von 60 bis 150°C. Besonders gut eignen sich Polyamide und/oder Polyester. Hierbei sind aus der Stoffklasse der Polyamide Homopolyamide und/oder Copolyamide aus -Aminocapronsäure, ω-Aminoönanthsäure, ω-Aminocaprylsäure, ω-Aminopelargonsäure, ω-Aminocaprinsäure, ω-Aminoundecylsäure, ω-Aminolaurinsäure und/oder Caprolactam, Lactam-7, Lactam-8, Lactam-9, Lactam-10, Lactam-11, Laurinlactam und/oder aus Dimethylendiamin, Trimethylendiamin, Tetramethylendiamin, Pentamethylendiamin, Hexamethylendiamin, Polyetherdiamin und Oxalsäure, Malonsäure, Bernsteinsäure, Glutarsäure, Adipinsäure, Pimelinsäure, Korksäure, Azelainsäure, Sebacinsäure, Nonandicarbonsäure, Decandicarbonsäure, Undecandisäure, Dodecandisäure, dimerisierter Fettsäure bevorzugt.

Besonders bevorzugt sind solche aus Caprolactam, Laurinlactam, ω-Aminolaurinsäure, ω-Aminocapronsäure, Hexamethylendiamin, Polyetherdiamin, Adipinsäure, dimerisierter Fettsäure oder deren Mischungen.

Aus der Stoffklasse der Polyester sind Homopolyester und/oder Copolyester aus ω-Hydroxyessigsäure, ω-Hydroxypropionsäure, ω-Hydroxybuttersäure, ω-Hydroxyvaleriansäure, ω-Hydroxycapronsäure, ω-Hydroxyönanthsäure, ω-Hydroxycaprylsäure,ω-Hydroxypelargonsäure, ω-Hydroxycaprinsäure, ω-Hydroxyundecylsäure, ω-Hydroxylaurinsäure, und/oder Caprolacton, Lacton-7, Lacton-8, Lacton-9, Lacton-10, Lacton-11, Laurinlacton und /oder Ethylenglykol, Propandiol, Butandiol, Pentandiol, Hexandiol, einem aliphatischen Diolgemisch mit 2 bis 18 C-Atomen und Oxalsäure, Malonsäure, Bernsteinsäure, Glutarsäure, Adipinsäure, Pimelinsäure, Korksäure, Azelainsäure, Sebacinsäure, Nonandicarbonsäure, Decandicarbonsäure, Undecandisäure, Dodecandisäure, Terephthalsäure, Isophthalsäure und/oder deren Anhydride und/oder deren Chloride und/oder deren Ester bevorzugt. Besonders bevorzugt sind solche aus einem aliphatischen Diolgemisch mit 2 bis 18 C-Atomen, ω-Hydroxycapronsäure, Butan-1,4-diol, Adipinsäure, Terephtalsäure, Isophthalsäure oder deren Mischungen.

Homopolyester und/oder Copolyester aus aliphatischen Dicarbonsäuren mit 2 bis 12 C-Atomen und aliphatischen Diolen mit 2 bis 6 C-Atomen sind ganz besonders geeignet.

Als Komponente b) haben sich in der Praxis die oben genannten Copolyamide und Copolyester oder deren Mischungen besonders bewährt, wobei diese ganz oder teilweise durch die oben genannten Homopolymeren ersetzt sein können.

Als auf diesem Gebiet übliche Zusatzstoffe können optische Aufheller und/oder Stabilisatoren und/oder Antioxidantien und/oder Antiflammmittel und/oder Farbstoffe und/oder Füllstoffe und/oder Verarbeitungshilfsmittel zusätzlich als Komponente c) in Mengen von 0 bis 20 Gew.-Teilen eingesetzt werden.

In einer bevorzugten Ausführungsform enthält die erfindungsgemässe einphasige Stärke-Polymer-Mischung die Komponente a) in Gew.-Teilen von 50 bis 95 und die Komponente b) in Gew.-Teilen von 50-5, wobei 70 bis 80 Gew.-Teile der Komponente a) und 30 bis 20 Gew.-Teile der Komponente b) besonders bevorzugt sind.

Das Verfahren zur Herstellung der erfindungsgemässen einphasigen Stärke-Polymer-Mischung umfasst das gemeinsame Aufschmelzen der Komponenten a) und b) im Verhältnis von 10/90 bis 99/1 in einem Extruder oder in einer Spritzgussmaschine bei Temperaturen von mindestens 10°C unter dem Zersetzungspunkt der Stärke und maximal 30°C, bevorzugt 20°C, über dem Schmelz- oder Erweichungspunkt des Polymeren.

Ueber die Einstellung der Verarbeitungstemperatur lässt sich durch einfache Vorversuche ein optimales Verhältnis der Viskosität des Polymeren zu der durch die Temperatur nur wenig beeinflussbaren Viskosität der Stärke einstellen, indem durch intensives Scheren der Komponenten das homogene Mischen ihrer Schmelzen möglich wird.

Die erfindungsgemässe Stärke-Polymer-Mischung kann zur Herstellung von thermoplastisch geformten Teilen verwendet werden, wobei bevorzugterweise zuerst ein Granulat hergestellt wird, das dann zur Produktion von Formteilen eingesetzt wird. Diese können durch Spritzgiessen, Blasformen, Extrusion, Koextrusion, Spritzprägen oder Umformen, wie zum Beispiel Kalandrieren oder Tiefziehen, hergestellt werden. Besonders bevorzugt ist hierbei die Herstellung von Mono- oder Koextrusionsfolien, welche als Flach- oder Blasfolien ausgebildet sein können.

Eine spezielle Ausführungsform solcher Folien besteht aus 50 bis 95 Gew.-Teilen Stärkegranulat (Komponente a)) und 50 bis 5 Gew.-Teilen ausgewähltem linearen Polymeren (Komponente b)).

Komponente c) kann entweder bei der Herstellung der einphasigen Stärke-Polymer-Mischung zudosiert werden oder bevorzugterweise bereits den Komponenten a) und/oder b) zugefügt worden sein.

Vorteile der erfindungsgemässen Stärke-Polymer-Mischung:
1. Einphasigkeit ohne Zusatz eines polymeren Verträglichkeitsvermittlers
2. Ueberraschenderweise biologische Abbaubarkeit der Polymerkomponente
3. Gute Reissfestigkeit bzw. Reissdehnung
4. Verarbeitbarkeit zu lagerstabilem Granulat aufgrund der geringen Neigung zur Feuchtigkeitsaufnahme
5. Einfache Verarbeitung ohne Blockneigung und Klebrigkeits probleme zu Folien
Bei der Herstellung von Koextrusionsfolien aus der erfindungsgemässen einphasigen Stärke-Polymer-Mischung und weiteren Polymeren müssen diese Polymere einen Schmelz- oder Erweichungspunkt von 50 bis 180°C, bevorzugt 60-170°C, besitzen. Geeignet hierfür sind Copolyamide, Copolyester und/oder Polyolefine. Hierbei sind Polyolefine ausgewählt aus der Gruppe Polyethylen, Polypropylen, Polybutylen und deren Derivate bevorzugt. Besonders bevorzugt ist Polyethylen und/oder dessen Derivate.

In einer speziellen Ausführungsform bildet die einphasige Stärke-Polymer-Mischung die Mittelschicht und das/die weitere(n) Polymere(n) die Innen- und Aussenschicht der Koextrusionsfolie. Bei mehr als drei Schichten liegen somit die Schichten abwechselnd vor, wobei die Wahl der Aussenschicht je nach dem gewünschten Verwendungszweck der Folie erfolgt.

Alle Folien lassen sich in einer Dicke von 20 bis 500 µm, bevorzugt 50 bis 100 µm, herstellen.

Vorteile der erfindungsgemässen Folien:
1. Gute Haftung der Koextrusionsfolienschichten ohne Zusatz eines Haftvermittlers bzw. ohne einer Kleberzwischenschicht
2. Folienschicht aus der Stärke-Polymer-Mischung hat im trockenen Zustand Barrierewirkung gegen O₂, N₂ und CO₂
3. Biologische Abbaubarkeit der Monofolien
4. Verbesserte Feuchtigkeitsresistenz
5. Kaltverstreckbarkeit der Monofolien
6. Hohe Dehnfähigkeit der Monofolien, z.T. über 400 %
7. Verschweissung der Monofolien mit üblichen Heiss-Siegelgeräten möglich, wobei vollkommen transparente Siegelnähte erhalten werden
8. Antistatisches Verhalten der Monofolien
9. Bedruckbarkeit der Monofolien mit wasserlöslichen Farben
10. Papierartiger Griff der Monofolien im hochverstrecktem Zustand
11. Glatte Oberflächen der Monofolien

Die Monofolien eignen sich zum Beispiel zur Herstellung von Tragtüten, Müllsäcken, Landwirtschaftsfolien, Windeldeckfolien sowie für biologisch abbaubare Folien und Filme jeder Art.

Ausserdem können alle Folien einem thermoplastischen Umformverfahren, wie z.B. Tiefziehen, unterworfen werden, wobei bevorzugterweise Blisterverpackungen hergestellt werden können.

In Tabelie 1 sind die Herstellungsparameter von einphasigen Stärke-Polymer-Mischungen und in Tabelle 2 deren Eigenschaften zusammengestellt. In Tabelle 3 sind die Extrusionsparameter sowie die Eigenschaften der Mono- und Koextrusionsfolien zusammengefasst.

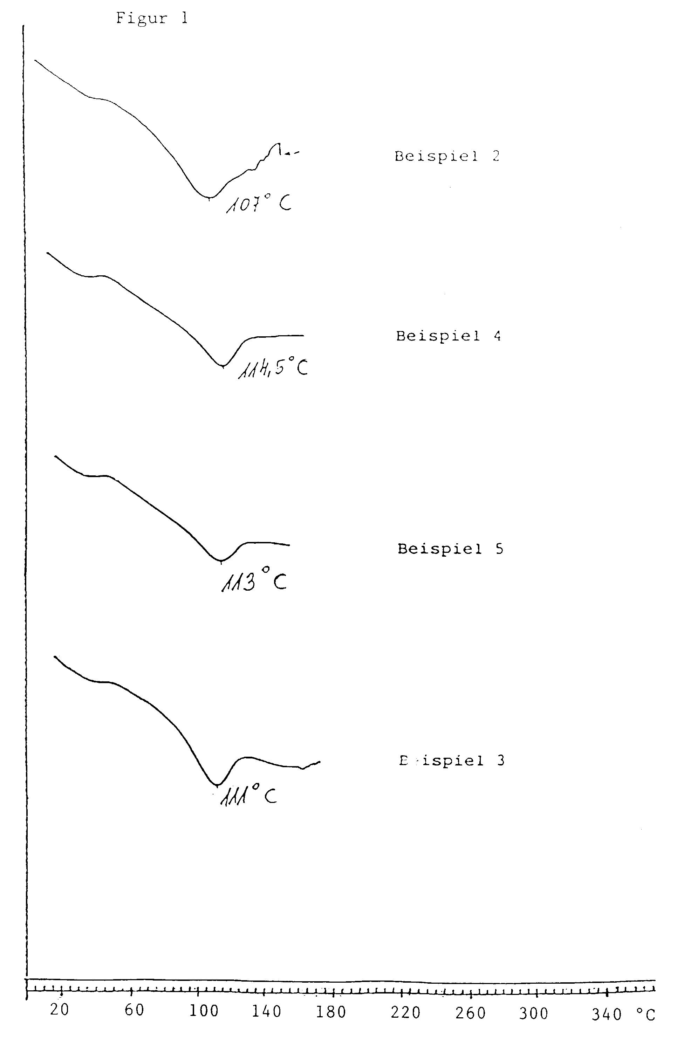

Figur 1 zeigt die DSC-Kurven der Stärke-Polymer-Mischungen von den Beispielen 2 bis 5. Der jeweils nur eine Schmelzpunkt beweist die Einphasigkeit der erfindungsgemässen Stärke-Polymer-Mischungen.

Die folgenden Beispiele erläutern die Erfindung ohne sie zu beschränken.

### Beispiel 1:

### Herstellung der biologisch abbaubaren Stärkeformmasse (Komponente a))

Nach dem in der deutschen Patentanmeldung DE P 41 17 628 6 beschriebenen Verfahren wurde aus 70 Gew.-Teilen Hydroxypropylmaisstärke mit einem Substitutionsgrad von 0,06 und einem Amylosegehalt von 50 Gew.-% sowie 15 Gew.-Teilen Glycerin, 12,8 Gew.-Teilen Sorbit, 2 Gew.-Teilen Harnstoff und 0,2 Gew.-Teilen Magnesiumstearat eine Stärkeformmasse hergestellt, die anschliessend granuliert wurde.

### Beispiele 2 bis 19, inklusive Vergleichsbeispiele 7 und 9 bis 12

### Herstellung der biologisch abbaubaren, einphasigen Stärke-Polymer-Mischung

Das Stärkegranulat aus Beispiel 1 wurde mit einem Granulat des ausgewählten, linearen Polymeren (Komponente b)) vermischt und in die Dosierzone eines Doppelwellenextruders ZSK-30 (Firma Werner & Pfleiderer) mit 6 Heizzonen eindosiert.
Drehzahl und Durchsatz betrugen 100 UPM bzw. 8-10 kg/h. Polymertyp, Polymerschmelztemperatur, Gewichtsanteil des Polymeren, Extrusionstemperaturen und Granulateigenschaften sind der Tabelle 1 zu entnehmen. Die Materialeigenschaften der resultierenden einphasigen Stärke-Polymer-Mischungen sind in Tabelle 2 zusammengefasst.

Der Endwassergehalt der einphasigen Stärke-Polymer-Mischungen wurde nach Karl-Fischer gemäss DIN 53 714, der Schmelzpunkt differentialkalorimetrisch im trockenen Zustand mit einer Aufheizrate von 20°C/min in einem Du Pont Thermal Analyzer-Gerät Typ 1091B bestimmt. Die Schmelzviskosität wurde mittels Melt-Flow-Index-Methode bei 160°C und einer Belastung von 236,4 N gemessen. Die mechanischen Eigenschaften wurden anhand von Spritzgussprüfstäben nach DIN 53 457 (Zug-E-Modul) und DIN 53 455 (Reissfestigkeit und Reissdehnung) ermittelt.

Bei Untersuchungen zur biologischen Abbaubarkeit wurde überraschenderweise festgestellt, dass das Polymere in erfindungsgemässer einphasigen Stärke-Polymer-Mischung bzw. die aus ihr hergestellten Blasfolien einen rascheren Sauerstoffverbrauch aufweisen als das reine Polymere (Komponente b)) der Stärke-Polymer-Mischung. Es ist bekannt, dass lineare Polyester oder Polyamide aufgrund ihrer strukturellen Verwandschaft mit Peptiden zum biologischen Abbau prädestiniert sind. Die dennoch vorhandene Resistenz dieser Polymeren beruht auf deren schlechten Benetzbarkeit mit Wasser, in dem sich die Abbaubakterien befinden.
Eine mögliche Erklärung des genannten überraschenden Effekts ist, dass durch die erfindungsgemässe Stärkeformmassen-Komponente die ansonst geringe Benetzbarkeit des Polymeren mit Wasser stark erhöht wird und zusätzliche synergistische Effekte auftreten.

Die Vergleichsbeispiele 7 bzw. 9 bis 12 zeigen, dass bei Nichteinhaltung der 3 Temperaturbedingungen, nämlich (a) Schmelzpunkt des Polymeren zwischen 60 und 150°C, (b) Verarbeitungstemperatur maximal 30°C über dem Schmelzpunkt des Polymeren und (c) Verarbeitungstemperatur mindestens 10°C unter der Zersetzungstemperatur der Stärke, die für die hier bevorzugt verwendete Komponente a) 190°C beträgt, Braunfärbung resultiert.

### Beispiele 20 bis 22

### Herstellung von Koextrusionsfolien

Auf einer dem Stand der Technik entsprechenden Koextrusionsanlage mit drei Extrudern wurden aus der granulierten einphasigen Stärke-Polymer-Mischung und Lucalen (BASF) Blasfolien hergestellt. Hierbei erzeugte Extruder 1 die Lucalen- Innenschicht, Extruder 2 die Mittelschicht aus der einphasigen Stärke-Polymer-Mischung und Extruder 3 die Lucalen- Aussenschicht. Extrusionsparameter und Eigenschaften der Folien sind Tabelle 3 zu entnehmen. Obwohl ohne Haftvermittlerzusatz bzw. ohne Klebezwischenschicht haften die einzelnen Folienschichten sehr gut aneinander.

### Beispiele 23 bis 27

### Herstellung von Monofolien

Auf der gleichen Extrusionsanlage wie in den Beispielen 20 bis 22, jedoch mit nur einem Extruder gefahren, wurden aus der granulierten erfindungsgemässen einphasigen Stärke-Polymer-Mischung Blasfolien hergestellt. Extrusionsparameter und Eigenschaften der Folien sind Tabelle 3 zu entnehmen.

In den Beispielen und Vergleichsbeispielen verwendete Markenprodukte:
- Lucalen A-2920 M ist ein Ethylencopolymeres der Firma BASF mit einem Schmelzpunkt von 97°C
- Grilon CF 62 BSE ist ein Copolyamid auf Basis der Monomeren PA 6 und PA 6.9 der Firma EMS-Chemie mit einem Schmelzpunkt von 136°C
- Grilon CR 9 ist ein Copolyamid auf Basis der Monomeren von PA 6 und PA 12 der Firma EMS-Chemie mit einem Schmelzpunkt von 200°C
- Grilon CA 6E ist ein Copolyamid auf Basis der Monomeren von PA 6 und PA 12 der Firma EMS-Chemie mit einem Schmelzpunkt von 130°C
- Grilamid ELY 60 ist ein Copolyamid der Firma EMS-Chemie auf Basis von Lactam-12, Polyetherdiamin und dimerisierter Fettsäure mit einem Schmelzpunkt von 160°C
- Griltex 6 ist ein Copolyester der Firma EMS-Chemie auf Basis von Terephthal-, Isophthalsäure und Butandiol mit einem Schmelzpunkt von 128°C
- Griltex 8 ist ein Copolyester der Firma EMS-Chemie auf Basis von Terephthal-, Isophthalsäure und Butandiol mit einem Schmelzpunkt von 115°C
- Griltex 9 ist ein Copolyester der Firma EMS-Chemie auf Basis von Terephthal-, Isophthalsäure und einem aliphatischen Diolgemisch mit einem Schmelzpunkt von 118°C

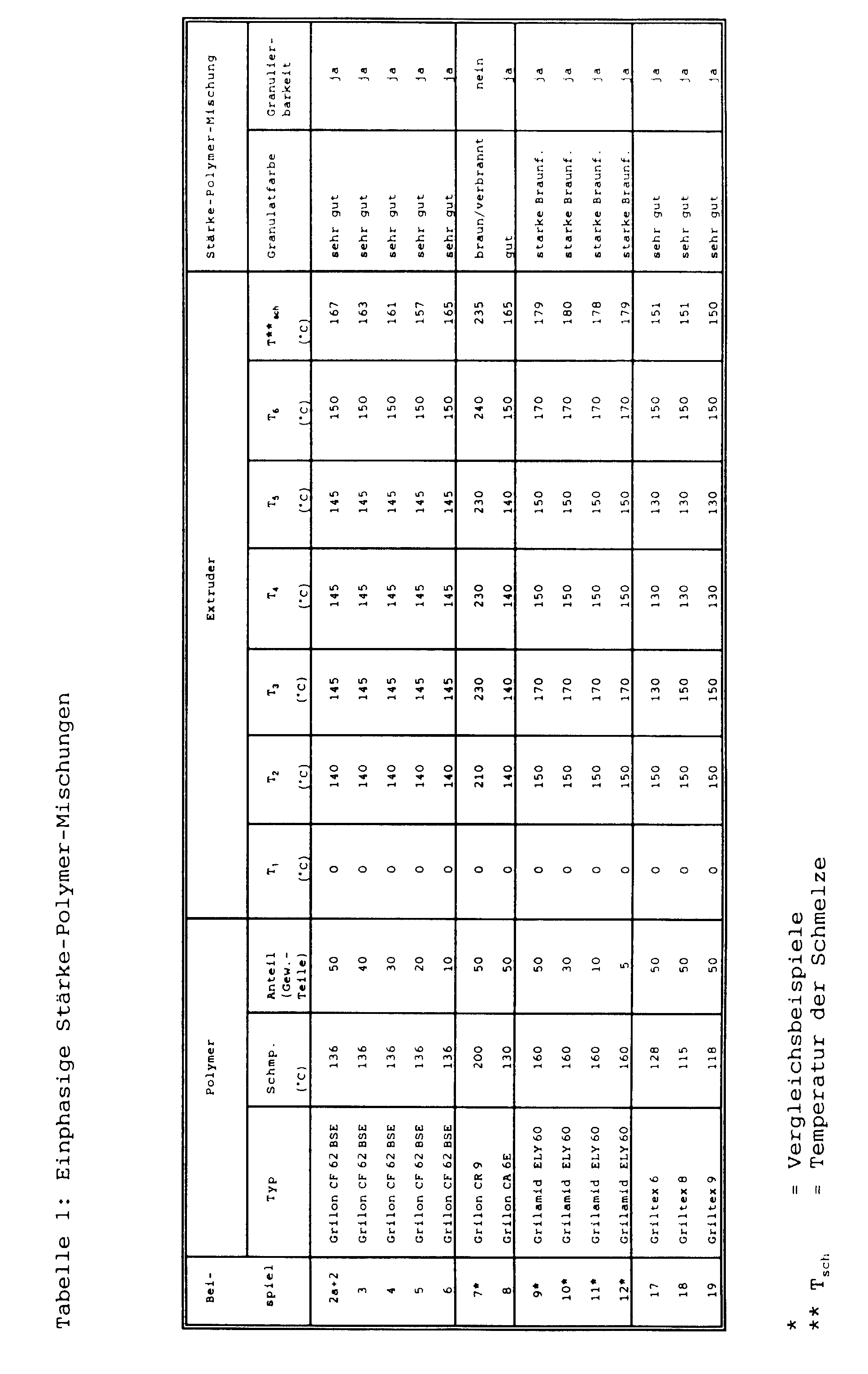

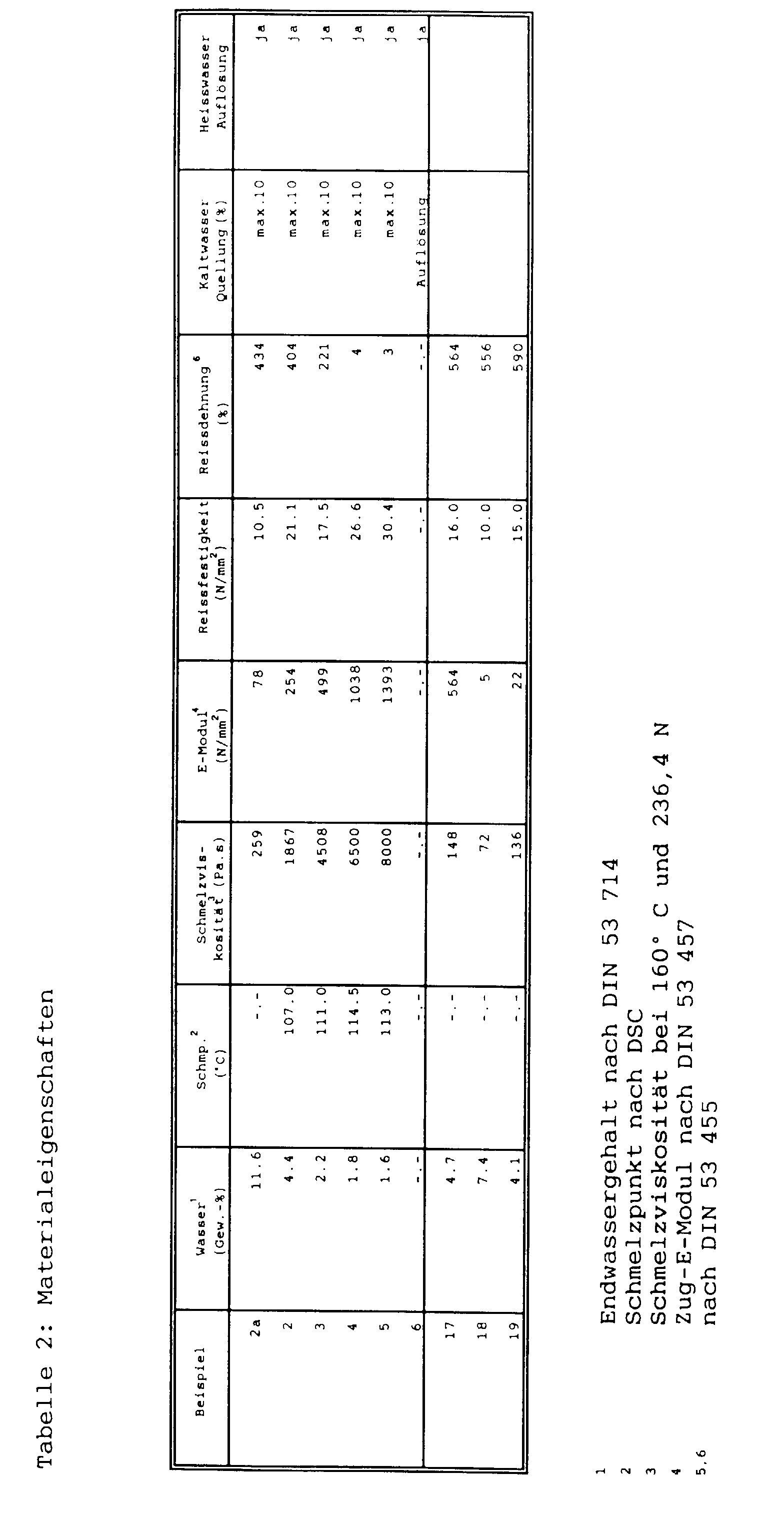

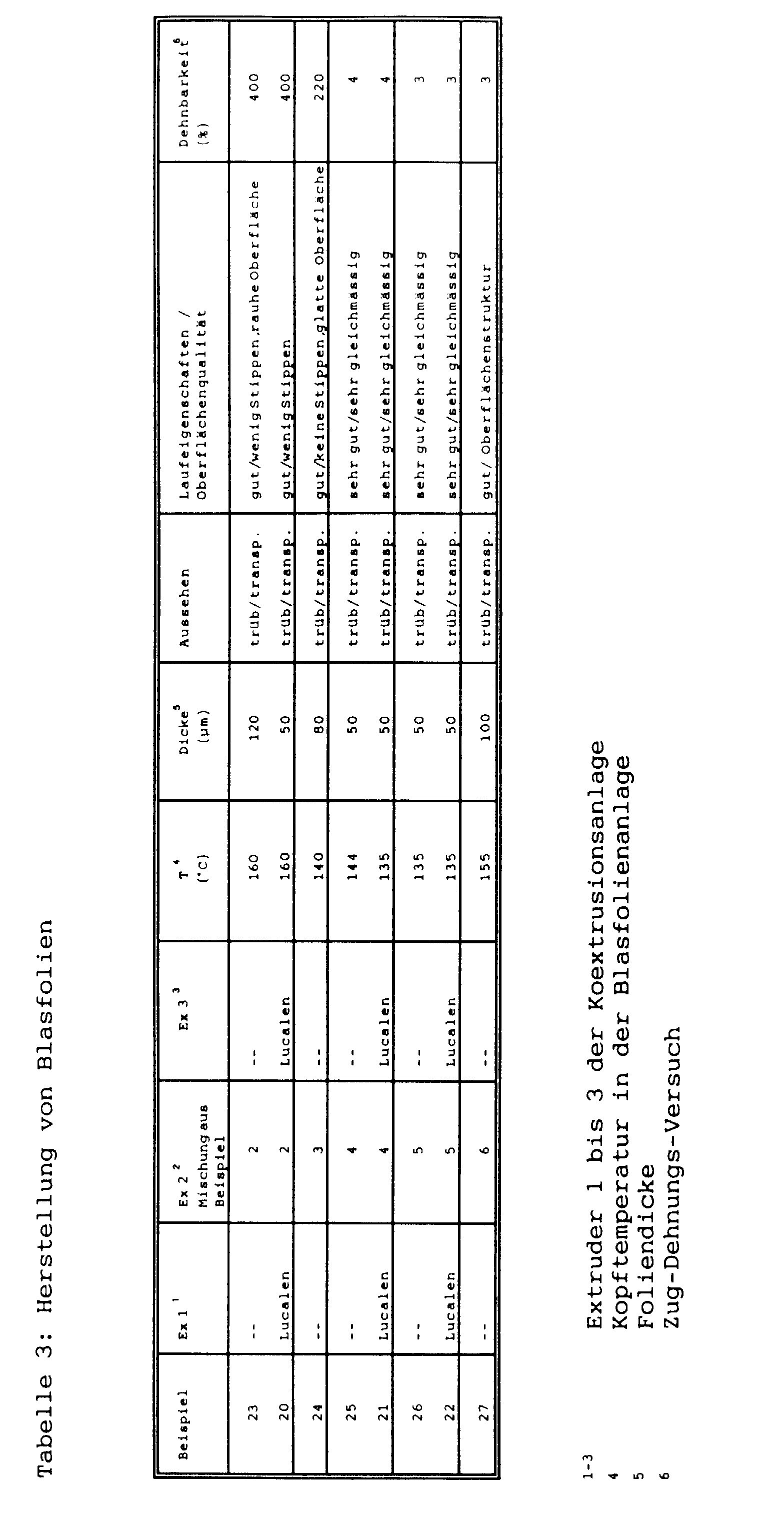

## Patentansprüche

1. Stärke-Polymer-Mischung, dadurch gekennzeichnet, daß sie biologisch abbaubar und einphasig ist und besteht aus
(a) 10 bis 99 Gew.-Teilen einer Stärkeformmasse hergestellt aus
(i) 95 bis 45 Gew.-Teilen mindestens einer chemisch modifizierten Stärke, wobei die chemisch modifizierte Stärke einen Amylosegehalt von 20 bis 100 Gew.-% besitzt und der Substitutionsgrad 0,01 bis 0,2 beträgt,
(ii) 5 bis 55 Gew.-Teilen mindestens eines Weichmachers und/oder Destrukturierungsmittels, wobei der Weichmacher eine organische Verbindung mit mindestens einer Hydroxylgruppe ist, und sich die Gew.-Teile von (i) und (ii) auf 100 ergänzen
(iii) 0,1 bis 2 Gew.-Teilen eines Emulgators, sowie
(b) 90 bis 1 Gew.-Teilen mindestens eines Polyamids oder Polyesters mit einem Schmelz- oder Erweichungspunkt von 60 bis 150°C,
wobei sich die Gewichtsteile der Komponenten (a) und (b) auf 100 ergänzen und im Verhältnis von 10/90 bis 99/1 vorgemischt und bei Temperaturen von mindestens 10°C unter dem Zersetzungspunkt der Stärke und maximal 30°C über dem Schmelzpunkt der Komponente (b) in der Schmelze homogen gemischt und extrudiert oder coextrudiert werden,
und gegebenenfalls zusätzlich
(c) bis 20 Gew.-Teilen von auf diesem Gebiet üblichen Zusatzstoffen.

2. Mischung gemäss Anspruch 1, dadurch gekennzeichnet, dass sie aus 70 bis 80 Gew.-Teilen der Komponente (a) und 30 bis 20 Gew.-Teilen der Komponente (b) besteht.

3. Mischung gemäss den Ansprüchen 1 oder 2, dadurch gekennzeichnet, dass die chemisch modifizierte Stärke einen natürlichen Wassergehalt von 5 bis 16 Gew.-%, besitzt.

4. Mischung gemäss den Ansprüchen 1 bis 3, dadurch gekennzeichnet, dass die chemisch modifizierte Stärke einen Amylosegehalt von 50 bis 100 Gew.-% besitzt.

5. Mischung gemäss den Ansprüchen 1 bis 4, dadurch gekennzeichnet, dass die chemisch modifizierte Stärke durch Umsetzung ihrer OH-Gruppen mit Alkylenoxiden oder Ether-, Ester-, Urethan-, Carbamat- und/oder Isocyanatbildenden Stoffen modifiziert ist.

6. Mischung gemäss den Ansprüchen 1 bis 5, dadurch gekennzeichnet, dass die chemisch modifizierte Stärke eine Hydroxy(C₂ bis C₆)alkyl-, Acetyl- oder Carbamatstärke oder deren Mischungen ist.

7. Mischung gemäss den Ansprüchen 1 bis 6, dadurch gekennzeichnet, dass Komponente a) den Weichmacher in Mengen von 9,8 bis 39,8 Gew.-Teilen enthält.

8. Mischung gemäss den Ansprüchen 1 bis 7, dadurch gekennzeichnet, dass der Weichmacher Sorbit, Mannit, D-Glukose, Glycerin, Ethylenglykol, Polyethylenglykol, Propylenglykol oder deren Mischungen ist.

9. Mischungen gemäss den Ansprüchen 1 - 8, dadurch gekennzeichnet, dass Komponente a) den Emulgator in Mengen von 0,1 bis 1 Gew.-Teilen enthält.

10. Mischung gemäss den Ansprüchen 1 bis 9, dadurch gekennzeichnet, dass der Emulgator eine Verbindung mit einem Hydrophil - Lipophil - Balance-Wert von 0 bis 20 ist.

11. Mischung gemäss den Ansprüchen 1 bis 10, dadurch gekennzeichnet, dass Teil (ii) Komponente a) Harnstoff und/oder Harnstoffderivate in Mengen von 0,1 bis 2 Gew.-%, enthält.

12. Mischung gemäss den Ansprüchen 1 bis 11, dadurch gekennzeichnet, dass Komponente a) aus 70 Gew.-Teilen Hydroxyethyl- und/oder Hydroxypropylstärke mit einem Substitutionsgrad von 0,06 und einem Amylosegehalt von 50 Gew.-%, 15 Gew.-Teilen Glycerin, 12,8 Gew.-Teilen Sorbit, 2 Gew.-Teilen Harnstoff und 0,2 Gew.-Teilen Magnesiumstearat besteht.

13. Mischung gemäss einem der Ansprüche 1 bis 12, dadurch gekennzeichnet, dass Komponente b) ein Homopolyamid und/oder Copolyamid aus ω-Aminocarbonsäure und/oder Lactamen mit 6 bis 12 C-Atomen und/oder aus aliphatischen Diaminen mit 2 bis 6 C-Atomen, Polyetherdiaminen und -linearen Dicarbonsäuren mit 2 bis 12 C-Atomen, dimerisierter Fettsäure, bevorzugt Caprolactam, Laurinlactam, ω-Aminolaurinsäure, ω-Aminocapronsäure, Hexamethylendiamin, Polyetherdiamin, Adipinsäure, dimerisierter Fettsäure oder deren Mischungen, ist.

14. Mischung gemäss einem der Ansprüche 1 bis 12, dadurch gekennzeichnet, dass Komponente b) ein Homopolyester und/oder Copolyester aus ω-Hydroxycarbonsäuren mit 2 bis 12 C-Atomen und/oder Lactonen mit 6 bis 12 C-Atomen und/oder aus aliphatischen Diolen mit 2 bis 6 C-Atomen, einem aliphatischen Diolgemisch mit 2 bis 18 C-Atomen und linearen Dicarbonsäuren mit 2 bis 12 C-Atomen, Terephthalsäure, Isophthalsäure, bevorzugt ω-Hydroxycapronsäure, Butan-1,4-diol, einem aliphatischen Diolgemisch mit 2 bis 18 C-Atomen, Adipinsäure, Terephtalsäure, Isophthalsäure oder deren Mischungen, ist.

15. Mischung gemäss einem der Ansprüche 1 bis 12, dadurch gekennzeichnet, dass Komponente b) ein aliphatischer Homopolyester und/oder Copolyester aus ω-Hydroxycarbonsäuren mit 2 bis 12 C-Atomen und/oder Lactonen mit 6 bis 12 C-Atomen und/oder aus aliphatischen Diolen mit 2 bis 6 C-Atomen und aliphatischen Dicarbonsäuren mit 2 bis 12 C-Atomen ist.

16. Mischung gemäss den Ansprüchen 1 bis 15, dadurch gekennzeichnet, dass die auch auf diesem Gebiet üblichen Zusatzstoffe optische Aufheller und/oder Stabilisatoren und/oder Antioxidantien und/oder Farbstoffe und/oder Füllstoffe und/oder Antiflammmittel und/oder Verarbeitungshilfen, sind.

17. Verfahren zur Herstellung einer Stärke-Polymer-Mischung gemäß den Ansprüchen 1 bis 16, dadurch gekennzeichnet, daß die Komponenten a) und b) bei Temperaturen von mindestens 10°C unter dem Zersetzungspunkt der Stärke und maximal 30°C über dem Schmelz- oder Erweichungspunkt des ausgewählten linearen Polymeren in der Schmelze homogen gemischt und extrudiert oder coextrudiert werden.

18. Verwendung einer Stärke-Polymer-Mischung gemäss den Ansprüchen 1 bis 16 zur Herstellung von thermoplatisch geformten Teilen durch Spritzgiessen, Extrusion, Koextrusion, Blasformen, Spritzprägen oder Umformen.

19. Verwendung einer Stärke-Polymer-Mischung zur Herstellung von thermoplastisch geformten Teilen gemäss Anspruch 18, daduch gekennzeichnet, dass sie Mono- oder Koextrusionsfolien sind und eine Dicke von 20 bis 500 µm, bevorzugt 50 bis 100 µm, aufweisen.

20. Verwendung einer Stärke-Polymer-Mischung gemäss Anspruch 19, dadurch gekennzeichnet, dass die Folien aus
50 - 95 Gew.-Teilen der Komponente a) und
50 - 5 Gew.-Teilen der Komponente b)
bestehen.

21. Verwendung einer Stärke-Polymer-Mischung gemäss Anspruch 19, dadurch gekennzeichnet, dass die Koextrusionsfolien aus der Stärke-Polymer-Mischung -Mischung und mindestens einem weiteren Polymeren mit einem Schmelz- oder Erweichungspunkt von 50 bis 180°C, bestehen.

22. Verwendung einer Stärke-Polymer-Mischung gemäss Anspruch 21, dadurch gekennzeichnet, dass das weitere Polymere ein Copolyamid und/oder ein Copolyester und/oder ein Polyolefin ist.

23. Verwendung einer Stärke-Polymer-Mischung gemäss Anspruch 22, dadurch gekennzeichnet, dass das Polyolefin ein Polyethylen und/oder Polypropylen und/oder Polybutylen und/oder deren Derivate, bevorzugt Polyethylen und/oder dessen Derivate, ist.

24. Verwendung einer Stärke-Polymer-Mischung gemäss Anspruch 22 oder 23, dadurch gekennzeichnet, dass die Stärke-Polymer-Mischung die Mittelschicht und das/die weitere(n) Polymere(n) die Innen- bzw. Aussenschicht bilden.

25. Verwendung einer Stärke-Polymer-Mischung gemäss den Ansprüchen 22 bis 23, dadurch gekennzeichnet, dass bei Koextrusionsfolien mit mehr als 3 Schichten die Stärke-Polymer-Mischung jeweils die zwischen den weiteren Polymeren liegende Schicht bildet.

## Claims

1. Starch/polymer mixture, characterized in that it is biodegradable and single-phase and is composed of
(a) from 10 to 99 parts by weight of a starch moulding composition produced from
(i) from 95 to 45 parts by weight of at least one chemically modified starch, where the chemically modified starch has an amylose content of from 20 to 100% by weight and the degree of substitution is from 0.01 to 0.2,
(ii) from 5 to 55 parts by weight of at least one plasticizer and/or destructuring agent, where the plasticizer is an organic compound having at least one hydroxyl group, and the sum of the parts by weight of (i) and (ii) is 100,
(iii) from 0.1 to 2 parts by weight of an emulsifier, and also
(b) from 90 to 1 part by weight of at least one polyamide or polyester having a melting or softening point of from 60 to 150°C,
where the sum of the parts by weight of components (a) and (b) is 100, and they are premixed in a ratio of from 10/90 to 99/1 and mixed and extruded or coextruded homogeneously in the melt at temperatures of at least 10°C below the decomposition point of the starch and at most 30°C above the melting point of component (b), and, if desired, additionally
(c) up to 20 parts by weight of additives customary in this sector.

2. Mixture according to Claim 1, characterized in that it is composed of from 70 to 80 parts by weight of component (a) and from 30 to 20 parts by weight of component (b).

3. Mixture according to Claims 1 or 2, characterized in that the chemically modified starch has a natural water content of from 5 to 16% by weight.

4. Mixture according to Claims 1 to 3, characterized in that the chemically modified starch has an amylose content of from 50 to 100% by weight.

5. Mixture according to Claims 1 to 4, characterized in that the chemically modified starch has been modified by reacting its OH groups with alkylene oxides or with substances which form ethers, esters, urethanes, carbamates and/or isocyanates.

6. Mixture according to Claims 1 to 5, characterized in that the chemically modified starch is a hydroxy (C₂-C₆)alkyl, acetyl or carbamate starch or mixtures of these.

7. Mixture according to Claims 1 to 6, characterized in that component a) contains amounts of from 9.8 to 39.8 parts by weight of the plasticizer.

8. Mixture according to Claims 1 to 7, characterized in that the plasticizer is sorbitol, mannitol, D-glucose, glycerol, ethylene glycol, polyethylene glycol, propylene glycol or mixtures of these.

9. Mixtures according to Claims 1 - 8, characterized in that component a) contains from 0.1 to 1 part by weight of the emulsifier.

10. Mixture according to Claims 1 to 9, characterized in that the emulsifier is a compound having a hydrophilic - lipophilic balance value of from 0 to 20.

11. Mixture according to Claims 1 to 10, characterized in that part (ii) of component a) contains from 0.1 to 2% by weight or urea and/or urea derivatives.

12. Mixture according to Claims 1 to 11, characterized in that component a) is composed of 70 parts by weight of hydroxyethyl and/or hydroxypropyl starch having a degree of substitution of 0.06 and an amylose content of 50% by weight, 15 parts by weight of glycerol, 12.8 parts by weight of sorbitol, 2 parts by weight of urea and 0.2 part by weight of magnesium stearate.

13. Mixture according to one of Claims 1 to 12, characterized in that component b) is a homopolyamide and/or copolyamide made from ω-aminocarboxylic acid and/or lactams having from 6 to 12 carbon atoms and/or from aliphatic diamines having from 2 to 6 carbon atoms, polyetherdiamines and linear dicarboxylic acids having from 2 to 12 carbon atoms, dimerized fatty acid, preferably caprolactam, laurolactam, ω-aminolauric acid, ω-aminocaproic acid, hexamethylenediamine, polyetherdiamine, adipic acid, dimerized fatty acid or mixtures of these.

14. Mixture according to one of Claims 1 to 12, characterized in that component b) is a homopolyester and/or copolyester made from ω-hydroxycarboxylic acids having from 2 to 12 carbon atoms and/or lactones having from 6 to 12 carbon atoms and/or aliphatic diols having from 2 to 6 carbon atoms, an aliphatic diol mixture having from 2 to 18 carbon atoms and linear dicarboxylic acids having from 2 to 12 carbon atoms, terephthalic acid, isophthalic acid, preferably ω-hydroxycaproic acid, 1,4-butanediol, an aliphatic diol mixture having from 2 to 18 carbon atoms, adipic acid, terephthalic acid, isophthalic acid or mixtures of these.

15. Mixture according to one of Claims 1 to 12, characterized in that component b) is an aliphatic homopolyester and/or copolyester made from (0-hydroxycarboxylic acids having from 2 to 12 carbon atoms and/or lactones having from 6 to 12 carbon atoms and/or from aliphatic diols having from 2 to 6 carbon atoms and aliphatic dicarboxylic acids having from 2 to 12 carbon atoms.

16. Mixture according to Claims 1 to 15, characterized in that the additives customary in this sector are optical brighteners and/or stabilizers and/or antioxidants and/or dyes and/or fillers and/or flame retardants and/or processing aids.

17. Procedure for producing a starch/polymer mixture according to Claims 1 to 16, characterized in that components a) and b) are mixed and extruded or coextruded in the melt homogeneously at temperatures of at least 10°C below the decomposition point of the starch and at most 30°C above the melting or softening point of the linear polymers selected.

18. Use of a starch/polymer mixture according to Claims 1 to 16 for producing thermoplastically shaped items by injection moulding, extrusion, coextrusion, blow moulding, injection-compression moulding or forming.

19. Use of a starch/polymer mixture for producing thermoplastically shaped items according to Claim 18, characterized in that they are mono- or coextruded films and have a thickness of from 20 to 500 µm, preferably from 50 to 100 µm.

20. Use of a starch/polymer mixture according to Claim 19, characterized in that the films are composed of
50 - 95 parts by weight of component a) and
50 - 5 parts by weight of component b).

21. Use of a starch/polymer mixture according to Claim 19, characterized in that the coextruded films are composed of the starch/polymer mixture and at least one other polymer having a melting or softening point of from 50 to 180°C.

22. Use of a starch/polymer mixture according to Claim 21, characterized in that the other polymer is a copolyamide and/or a copolyester and/or a polyolefin.

23. Use of a starch/polymer mixture according to Claim 22, characterized in that the polyolefin is a polyethylene and/or polypropylene and/or polybutylene and/or derivatives of these, preferably polyethylene and/or its derivatives.

24. Use of a starch/polymer mixture according to Claim 22 or 23, characterized in that the starch/polymer mixture forms the middle layer and the other polymer(s) form(s) the inner and/or outer layer.

25. Use of a starch/polymer mixture according to Claims 22 to 23, characterized in that if coextruded films have more than 3 layers, the starch/polymer mixture always forms the layer situated between the other polymers.

## Revendications

1. Composition polymère à base d'amidon, caractérisée en ce qu'elle est biodégradable et monophasique, et constituée de
(a) 10 à 99 parties en poids d'une masse d'amidon pouvant être mise en forme fabriquée à partir de
(i) 95 à 45 parties en poids au moins d'un amidon chimiquement modifié, l'amidon chimiquement modifié ayant une teneur en amylose de 20 à 100 % en poids, et le degré de substitution étant de 0,01 à 0,2,
(ii) 5 à 55 parties en poids au moins d'un émollient et/ou d'un agent de déstructuration, l'émollient étant un composé organique contenant au moins un groupe hydroxyle, et les parties en poids de (i) et (ii) se complétant à 100,
(iii) 0,1 à 2 parties en poids d'un émulsifiant, ainsi que
(b) 90 à 1 parties en poids au moins d'un polyamide ou d'un polyester ayant un point de fusion ou de ramollissement de 60 à 150 °C,
les parties en poids des composants (a) et (b) se complétant à 100, et étant mélangées de façon homogène dans la masse fondue, et extrudées ou co-extrudées à des températures inférieures d'au moins 10 °C au point de décomposition de l'amidon et supérieures de 30 °C maximum au point de fusion du composant (b) en étant mélangées au préalable dans un rapport de 10/90 à 99/1,
et le cas échéant,
(c) jusqu'à 20 parties en poids d'additifs supplémentaires usuels dans ce domaine.

2. Composition selon la revendication 1, caractérisée en ce qu'elle est constituée de 70 à 80 parties en poids du composant (a), et de 30 à 20 parties en poids du composant (b).

3. Composition selon les revendications 1 ou 2, caractérisée en ce que l'amidon chimiquement modifié a une teneur naturelle en eau de 5 à 16 % en poids.

4. Composition selon l'une quelconque des revendications 1 à 3, caractérisée en ce que l'amidon chimiquement modifié a une teneur en amylose de 50 à 100 % en poids.

5. Composition selon l'une quelconque des revendications 1 à 4, caractérisée en ce que l'amidon chimiquement modifié est modifié en faisant réagir ses groupes OH avec des oxydes d'alkylène ou des matières formant des éthers, des esters, des uréthanes, des carbamates et/ou des isocyanates.

6. Composition selon l'une quelconque des revendications 1 à 5, caractérisée en ce que l'amidon chimiquement modifié est un amidon hydroxy(C₂ à C₆)alkylé, acétylé ou carbamaté ou leurs mélanges.

7. Composition selon l'une quelconque des revendications 1 à 6, caractérisée en ce que le composant a) contient l'émollient dans des proportions de 9,8 à 39,8 parties en poids.

8. Composition selon l'une quelconque des revendications 1 à 7, caractérisée en ce que l'émollient est du sorbitol, du mannitol, du D-glucose, de la glycérine, de l'éthylène glycol, du polyéthylène glycol, du propylène glycol ou leurs mélanges.

9. Compositions selon l'une quelconque des revendications 1 à 8, caractérisées en ce que le composant a) contient l'émulsifiant dans des proportions de 0,1 à 1 partie en poids.

10. Composition selon l'une quelconque des revendications 1 à 9, caractérisée en ce que l'émulsifiant est un composé d'une valeur d'équilibre hyrophile - lipophile de 0 à 20.

11. Composition selon l'une quelconque des revendications 1 à 10, caractérisée en ce que la partie (ii) du composant a) contient de l'urée et/ou des dérivés d'urée dans des proportions de 0,1 à 2 % en poids.

12. Composition selon l'une quelconque des revendications 1 à 11, caractérisée en ce que le composant a) est constitué de 70 parties en poids d'hydroxyéthyl et/ou d'hydroxypropyl-amidon ayant un degré de substitution de 0,06 et une teneur en amylose de 50 % en poids, 15 parties en poids de glycérine, 12,8 parties en poids de sorbitol, 2 parties en poids d'urée et 0,2 partie en poids de stéarate de magnésium.

13. Composition selon l'une quelconque des revendications 1 à 12, caractérisée en ce que le composant b) est un homopolyamide et/ou un copolyamide d'acide ω-aminocarboxylique et/ou de lactames contenant 6 à 12 atomes C et/ou de diamines aliphatiques contenant 2 à 6 atomes C, de polyétherdiamines et d'acides dicarboxyliques linéaires contenant 2 à 12 atomes C, d'acides gras dimérisés, de préférence de caprolactame, de laurolactame, d'acide ω-aminolaurique, d'acide ω-aminocaproïque, d'héxaméthyléne-diamine, de polyétherdiamine, d'acide adipique, d'acides gras dimérisés ou leurs mélanges.

14. Composition selon l'une quelconque des revendications 1 à 12, caractérisée en ce que le composant b) est un homopolyester et/ou un copolyester d'acides ω-hydroxycarboxyliques contenant 2 à 12 atomes C et/ou de lactones contenant 6 à 12 atomes C et/ou de diols aliphatiques contenant 2 à 6 atomes C, un mélange de diols aliphatiques contenant 2 à 18 atomes C et d'acides dicarboxyliques linéaires contenant 2 à 12 atomes C, d'acide téréphtalique, d'acide isophtalique, de préférence de l'acide ω-hydroxycaproïque, du butane-1,4-diol, un mélange de diols aliphatiques contenant 2 à 18 atomes C, de l'acide adipique, de l'acide téréphtalique, de l'acide isophtalique ou leurs mélanges.

15. Composition selon l'une quelconque des revendications 1 à 12, caractérisée en ce que le composant b) est un homopolyester aliphatique et/ou un copolyester d'acides ω-hydroxycarboxyliques contenant 2 à 12 atomes C et/ou de lactones contenant 6 à 12 atomes C et/ou de diols aliphatiques contenant 2 à 6 atomes C et d'acides dicarboxyliques aliphatiques contenant 2 à 12 atomes C.

16. Composition selon l'une quelconque des revendications 1 à 15, caractérisée en ce que les additifs usuels dans ce domaine sont des agents de blanchiment optique et/ou des stabilisateurs et/ou des antioxydants et/ou des colorants et/ou des matières de charge et/ou des agents anti-flamme et/ou des additifs de traitement.

17. Procédé destiné à la fabrication d'une composition polymère à base d'amidon selon l'une quelconque des revendications 1 à 16, caractérisé en ce que les composants a) et b) sont mélangés de façon homogène dans la masse fondue, et extrudés ou co-extrudés à des températures inférieures d'au moins 10 °C au point de décomposition de l'amidon et supérieures de 30 °C maximum au point de fusion ou de ramollissement du polymère linéaire choisi.

18. Utilisation d'une composition polymère à base d'amidon selon l'une quelconque des revendications 1 à 16 pour la fabrication de pièces formées par thermoplastie par moulage par injection, extrusion, co-extrusion, moulage par soufflage, moulage par estampage ou transformation.

19. Utilisation d'une composition polymère à base d'amidon pour la fabrication de pièces formées par thermoplastie selon la revendication 18, caractérisée en ce qu'elles sont des films mono- ou co-extrudés d'une épaisseur de 20 à 500 µm, de préférence de 50 à 100 µm.

20. Utilisation d'une composition polymère à base d'amidon selon la revendication 19, caractérisée en ce que les films sont constitués de
50 à 95 parties en poids du composant a), et
50 à 5 parties en poids du composant b).

21. Utilisation d'une composition polymère à base d'amidon selon la revendication 19, caractérisée en ce que les films sont co-extrudés à partir de la composition polymère à base d'amidon et sont constitués d'au moins un autre polymère ayant un point de fusion ou de ramollissement de 50 à 180 °C.

22. Utilisation d'une composition polymère à base d'amidon selon la revendication 21, caractérisée en ce que l'autre polymère est un copolyamide et/ou un copolyester et/ou une polyoléfine.

23. Utilisation d'une composition polymère à base d'amidon selon la revendication 22, caractérisée en ce que la polyoléfine est un polyéthylène et/ou un polypropylène et/ou un polybutylène et/ou leurs dérivés, de préférence du polyéthylène et/ou ses dérivés.

24. Utilisation d'une composition polymère à base d'amidon selon la revendication 22 ou 23, caractérisée en ce que la composition polymère à base d'amidon constitue la couche médiane, et en ce que l' (les) autre(s) polymère(s) constitue(nt) la couche intérieure ou extérieure.

25. Utilisation d'une composition polymère à base d'amidon selon les revendications 22 et 23, caractérisée en ce que, dans le cas de films co-extrudés comportant plus de 3 couches, la composition polymère à base d'amidon constitue à chaque fois la couche située entre les autres polymères.
